# EUROPEAN PATENT APPLICATION

(11) **EP 4 550 485 A1**
(43) Date of publication of application: **07.05.2025**
(21) Application number: 23207265.2
(22) Date of filing: 01.11.2023
(51) Int. Cl.: H01M 8/04089, H01M 8/04225, H01M 8/04302, H01M 8/0432, H01M 8/0438, H01M 8/04746, H01M 8/0662

(54) **A COMPUTER-IMPLEMENTED METHOD FOR OPERATING A FUEL CELL SYSTEM IN CONNECTION WITH START-UP OF THE FUEL CELL SYSTEM**

(71) Applicant: VOLVO TRUCK CORPORATION, 405 08 Göteborg (SE)
(72) Inventor: Neilson, Rohan, 721 31 Västerås (SE); Arya, Pranav, 412 85 Göteborg (SE)
(74) Representative: Valea AB

(57) **Abstract**

The present disclosure relates to a fuel cell system (110, 210) and a method for operating a fuel cell system in connection with start-up of the fuel cell system. The fuel cell system comprises:
- an anode volume (124, 224) and a cathode volume (122, 222),
- a fluid flow assembly (111, 211) comprising a plurality of fluid conduits and a fluid flow control device (113a, 113b, 213a, 213b), wherein a recirculation circuit (112, 212) is formed when a fluid connection between the anode volume and the cathode volume is enabled,
- a hydrogen gas supply device (130, 230), and
- a recirculation device (140, 240),
the method comprising:
- controlling the hydrogen gas supply device to supply the hydrogen gas,
- regulating the fluid flow control device such that the anode volume is fluidly connected to the cathode volume,
- controlling the recirculation device to recirculate the gas mixture in the fluid recirculation circuit such that the supplied hydrogen gas undergoes reaction with the residual oxygen during the recirculation.

## Description

### TECHNICAL FIELD

The disclosure relates generally to fuel cell vehicles. In particular aspects, the disclosure relates to a computer-implemented method for operating a fuel cell system in connection with start-up of the fuel cell system. The disclosure also relates to a fuel cell system, a computer system, a computer program product and a non-transitory computer-readable storage medium. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A fuel cell is an electrochemical cell which converts chemical energy into electricity. The fuel cell converts the chemical energy of a fuel, typically hydrogen, and an oxidant, typically oxygen, into electricity. Accordingly, a fuel cell can be used as an alternative or as a complement to electric batteries. In recent years fuel cells have been considered for powering electric vehicles.

The fuel cell comprises an anode and an anode volume to which fuel, typically hydrogen gas, is supplied, a cathode and a cathode volume to which oxidant, typically air, is supplied, and an electrolyte provided between the anode and the cathode. A catalyst provided at the anode causes the fuel to undergo oxidation reactions, generating ions and electrons. The ions move from the anode to the cathode through the electrolyte. Electrons flow from the anode to the cathode through an external circuit, producing electricity.

A fuel cell system which comprises one or more fuel cells is prone to degradation due to start-up and shutdown of the system. Typically, degradation is caused by high, reversed, or uneven voltage potentials, which are generally a result of uneven or undesirable distribution of reactants. Degradation may, e.g., also be caused by oxidation resulting from residual oxidant in the fuel cell. Degradation may also be caused by residual fuel in the anode flow field at fuel cell shutdown, which may contaminate the cathode flow field. At fuel cell start-up, the anode and cathode flow fields may contain a mixture of fuel and oxidant, which can cause hot spots and high potentials, contributing to degradation of the fuel cells.

Various strategies have been developed to mitigate degradation mechanisms during the startup and shutdown of fuel cell systems. Among these strategies, a known solution is purging, involving the use of inert gas to flush the fuel cell system. The primary aim of this purging method is to push the residual oxidant out of the fuel cell system as fast as possible. However, the rapid nature of this process may lead to significant gas concentration gradients, posing potential challenges. Additionally, implementing this purging method necessitates the provision of extra storage for the inert gas, further complicating the system's requirements. Moreover, hydrogen purge method is used for air-rich condition, which may cause carbon corrosion and may cause waste of fuel. Transition from hydrogen-rich condition using air as purge gas may also dump fuel into the exhaust and may cause sudden or localized heat release.

Therefore, there is a strive to develop improved technology related to fuel cell systems.

### SUMMARY

According to a first aspect of the disclosure, a computer system comprising a processing circuitry configured to operate a fuel cell system in connection with start-up of the fuel cell system according to claim 1 is provided. The fuel cell system comprises:
- a fuel cell stack comprising an anode side and a cathode side, wherein the anode side comprises an anode volume and the cathode side comprises a cathode volume,
- a fluid flow assembly comprising a plurality of fluid conduits and a fluid flow control device, wherein the fluid flow assembly is arranged to selectively enable a fluid connection between the anode volume and the cathode volume, wherein a recirculation circuit is formed when the fluid connection between the anode volume and the cathode volume is enabled,
- a hydrogen gas supply device, and
- a recirculation device arranged on the recirculation circuit and configured to recirculate a gas mixture of supplied hydrogen gas and residual gases in the recirculation circuit, wherein the residual gases comprise residual oxygen and residual nitrogen present in the fuel cell stack.
The processing circuitry is configured to:
- control the hydrogen gas supply device to supply the hydrogen gas to the fuel cell system,
- regulate the fluid flow control device such that the anode volume is fluidly connected to the cathode volume, and
- control the recirculation device to recirculate the gas mixture in the fluid recirculation circuit such that the supplied hydrogen gas undergoes reaction with the residual oxygen during the recirculation, resulting in a reduced amount of residual oxygen in the fuel cell system.

The first aspect of the disclosure may seek to avoid significant gas concentration gradients in the fuel cell system, for example, to avoid unbalanced conditions where an oxygen-rich environment may emerge at a single side, either on the anode or cathode side. In particular, it may seek to transit the fuel cell system from air-rich condition to a condition that is favorable for start-up without creating carbon corrosion conditions, significant concentration gradients, bursts of heat, uneven or undesirable voltage potentials. A technical benefit may include improved system homogeneity.

This technical benefit is achieved by implementation of the recirculation circuit, which may allow for a continuous circulation of the gas mixture within the fuel cell system. During this recirculation process, the supplied hydrogen gas may undergo simultaneous reaction with the residual oxygen in both the anode and cathode sides. As a result, no voltage differential is created between the anode and cathode, which may effectively eliminate any potential difference between them. Another technical benefit may include a stable and consistent voltage output and enhanced overall system stability.

Moreover, during this process, it may generate heat and water as byproducts of the chemical reaction, which may take place within both the cathode and anode volumes. As a result, it may allow for an even distribution of heat and moisture throughout the entirety of the fuel cell stack. This may be especially advantageous during cold starts, as it may effectively precondition and uniformly humidify the fuel cell stack. Consequently, the fuel cell system may become well-prepared for startup, enhancing its overall performance and efficiency.

According to a second aspect of the disclosure, a computer-implemented method for operating a fuel cell system in connection with start-up of the fuel cell system according to claim 2 is provided. The fuel cell system comprises:
- a fuel cell stack comprising an anode side and a cathode side, wherein the anode side comprises an anode volume and the cathode side comprises a cathode volume,
- a fluid flow assembly comprising a plurality of fluid conduits and a fluid flow control device, wherein the fluid flow assembly is arranged to selectively enable a fluid connection between the anode volume and the cathode volume, wherein a recirculation circuit is formed when the fluid connection between the anode volume and the cathode volume is enabled,
- a hydrogen gas supply device, and
- a recirculation device arranged on the recirculation circuit and configured to recirculate a gas mixture of supplied hydrogen gas and residual gases in the recirculation circuit, wherein the residual gases comprise residual oxygen and residual nitrogen present in the fuel cell stack.
The method comprises:
- controlling, by a processing circuitry, the hydrogen gas supply device to supply the hydrogen gas to the fuel cell system,
- regulating, by the processing circuitry, the fluid flow control device such that the anode volume is fluidly connected to the cathode volume,
- controlling, by the processing circuitry, the recirculation device to recirculate the gas mixture in the fluid recirculation circuit such that the supplied hydrogen gas undergoes reaction with the residual oxygen during the recirculation, resulting in a reduced amount of residual oxygen in the fuel cell system.

Advantages and technical benefits of the second aspect of the disclosure are largely analogous to the advantages and technical benefits of the first aspect of the disclosure. It shall also be noted that all examples of the second aspect of the disclosure are combinable with all embodiments of the first aspect of the disclosure, and vice versa.

Optionally in some examples, including in at least one preferred example, the hydrogen gas is supplied to the fuel cell system through hydrogen injection at a controllable injection rate. The injection rate may be sufficiently slow such that the hydrogen gas may be supplied in a gentle manner, allowing a gradual consumption of the residual oxygen. A technical benefit may include that significant gas concentration gradients may be avoided.

Optionally in some examples, including in at least one preferred example, a catalytic device at which reaction of the supplied hydrogen gas with the residual oxygen is promoted, wherein the catalytic device is provided separately from the fuel cell stack, and wherein the method further comprises:
- controlling, by the processing circuitry, the hydrogen gas supply device to inject the hydrogen gas into the catalytic device.

In this way, it may enable a more efficient passivation of the residual oxygen present in the fuel cell stack against freshly supplied hydrogen at the separately provided catalytic device, and thereby may protect the anode side and/or the cathode side from corroding. The catalytic device may be easily replaced and/or serviced, when necessary, without affecting the fuel cell stack. A technical benefit may include that a prolonged life span of the fuel cell system may be achieved.

Optionally in some examples, including in at least one preferred example, the method comprises:
- estimating, by the processing circuitry, a remaining oxygen level in the gas mixture,
- in response to the estimated remaining oxygen level being lower than a threshold value, regulating, the processing circuitry, the fluid flow control device such that the anode volume is fluidly disconnected from the cathode volume and, controlling, by the processing circuitry, the hydrogen gas supply device to terminate supply the hydrogen gas to the fuel cell system.

As such, the recirculation procedure may be terminated at an appropriate instance, e.g., after the residual oxygen has been completely removed.

Optionally in some examples, including in at least one preferred example, estimating the remaining oxygen level in the gas mixture further comprises:
- monitoring, by the processing circuitry, a temperature at the catalytic device and/or of the gas mixture, and
- estimating, by the processing circuitry, the remaining oxygen level in the gas mixture based on the monitored temperature.

The temperature at the catalytic device and/or of the gas mixture may generally provide a good indication of the ongoing chemical reaction process of the supplied hydrogen and the residual oxygen, which may also be an indication of the remaining oxygen level. By using temperature information to evaluate the remaining oxygen level in the gas mixture, it may eliminate the need of using a dedicated and a more costly oxygen sensor for the estimation. A technical benefit may include that the estimation may be performed using relatively simple and robust equipment.

Optionally in some examples, including in at least one preferred example, estimating the remaining oxygen level in the gas mixture further comprises:
- monitoring, by the processing circuitry, pressure at the catalytic device and/or of the gas mixture,
- estimating, by the processing circuitry, the remaining oxygen level in the gas mixture based on the monitored pressure.

Upon the injection of hydrogen gas into the catalytic device, an initial pressure drop may occur due to the chemical interaction between the hydrogen and residual oxygen. As the oxygen is progressively consumed in the reaction, a reversal in pressure dynamics may be observed. The partial pressure of the supplied hydrogen gas may begin to ascend, subsequently resulting in an increased pressure. As such, by monitoring the pressure changes, it may be possible to evaluate the remaining oxygen level in the gas mixture. In this way, it may eliminate the need to use a dedicated and a more costly oxygen sensor for the estimation. A technical benefit may include that the estimation may be performed using relatively simple and robust equipment.

Optionally in some examples, including in at least one preferred example, the method further comprises:
- in response to the anode volume being fluidly disconnected from the cathode volume, controlling, by the processing circuitry, the hydrogen gas supply device to supply hydrogen gas to the anode volume, and controlling, by the processing circuitry, an air supply device to supply air to the cathode volume, and
- starting, by the processing circuitry, the fuel cell system.

This is to ensure that the residual nitrogen present in the anode volume as well as in the cathode volume is purged, respectively. Thereafter, the fuel cell system may be well-prepared for start-up. A technical benefit may include that the fuel cell system may be better prepared for start-up.

According to a third aspect of the disclosure, a fuel cell system for supplying electric power according to claim 9 is provided. The fuel cell system comprises:
- a fuel cell stack comprising an anode side and a cathode side, wherein the anode side comprises an anode volume and the cathode side comprises a cathode volume,
- a fluid flow assembly comprising a plurality of fluid conduits and a fluid flow control device, wherein the fluid flow assembly is arranged to selectively enable a fluid connection between the anode volume and the cathode volume, wherein a recirculation circuit is formed when the fluid connection between the anode volume and the cathode volume is enabled,
- a hydrogen gas supply device configured to supply hydrogen gas to the fuel cell system, and
- a recirculation device arranged on the recirculation circuit and configured to recirculate a gas mixture of supplied hydrogen gas and residual gases in the recirculation circuit, wherein the residual gases comprise residual oxygen and residual nitrogen present in the fuel cell stack.
The fuel cell system further comprises a control unit comprising processing circuitry configured to:
- control the hydrogen gas supply device to supply the hydrogen gas to the fuel cell system,
- regulate the fluid flow control device such that the anode volume is fluidly connected to the cathode volume, and
- control the recirculation device to recirculate the gas mixture in the fluid recirculation circuit such that the supplied hydrogen gas undergoes reaction with the residual oxygen during the recirculation, resulting in a reduced amount of residual oxygen in the fuel cell system.

The control unit is configured to control the above-mentioned devices during the start-up of the fuel cell system, which may seek to avoid significant gas concentration gradients, for example, to avoid unbalanced conditions where an oxygen-rich environment emerges on a single side, either on the anode or cathode side. Advantages and technical benefits of the third aspect of the disclosure are largely analogous to the advantages and technical benefits of the first aspect and/or the second aspect of the disclosure.

Optionally in some examples, including in at least one preferred example, the hydrogen gas supply device comprises a fuel injector configured to supply the hydrogen gas at a controllable injection rate. The injection rate may be sufficiently slow such that the hydrogen gas may be supplied in a gentle manner, allowing a gradual consumption of the residual oxygen. A technical benefit may include that significant gas concentration gradients may be avoided.

Optionally in some examples, including in at least one preferred example, the fuel cell system further comprises a catalytic device at which reaction of the supplied hydrogen gas with the residual oxygen gas is promoted, wherein the catalytic device is provided separately from the fuel cell stack. In this way, it may enable a more efficient passivation of the residual oxygen present in the fuel cell stack against freshly supplied hydrogen at the separately provided catalytic device, and thereby may protect the anode side and/or the cathode side from corroding. The catalytic device may be easily replaced and/or serviced, when necessary, without affecting the fuel cell stack. A technical benefit may include that a prolonged life span of the fuel cell system may is achieved.

Optionally in some examples, including in at least one preferred example, the fluid flow control device comprises one or more three-way valves and/or one or more two-way valves. In some examples, two-way valves are used to enable and/or disable the fluid connection between the anode volume and cathode volume. In some other examples, three-way valves are used which may additionally control air supply from an air intake conduit into the cathode volume and from the cathode volume out to an exhaust conduit.

Optionally in some examples, including in at least one preferred example, the recirculation device comprises a blower, preferably arranged downstream of the anode volume. The blower may provide a steady flow of recirculated gas. As such, the gas mixture may be recirculated within the recirculation circulation at a steady and slow rate, such that hydrogen gas undergoes simultaneous reactions with the residual oxygen in both the anode and cathode volumes. A technical benefit may include improved system homogeneity.

Optionally in some examples, including in at least one preferred example, the recirculation device further comprises a turbocharger, preferably arranged downstream of the cathode volume, which may enhance the recirculation process. A technical benefit may include an enhanced recirculation process.

Optionally in some examples, including in at least one preferred example, the fuel cell system further comprises a humidifier configured to humidify the gas mixture prior to entering the cathode volume. In general, a proper humidity level may be needed to for proton conductivity in electrolyte and for maintaining a favorable condition of the membrane electrode assemblies of the fuel cell system. A technical benefit may include that a prolonged life span of the fuel cell system may be achieved.

Optionally in some examples, including in at least one preferred example, the humidifier is provided with one or more bypass valves, configured to selectively bypass the gas flow from the humidifier.

According to a fourth aspect of the disclosure, a computer program product comprising program code for performing, when executed by the processing circuitry, the method according to the second aspect of the disclosure is provided.

According to a fifth aspect of the disclosure, a non-transitory computer-readable storage medium comprising instructions, which when executed by the processing circuitry, cause the processing circuitry to perform the method according to the second aspect of the disclosure is provided.

According to a sixth aspect of the disclosure, a vehicle comprising a fuel cell system according to the third aspect of the disclosure is provided.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG.1** is a schematic side view of a vehicle;
**FIG. 2a** is a schematic view of fuel cell system according to an example;
**FIGS. 2b-2d** are schematic views of fuel cell systems according to other examples;
**FIG. 3** is a flow chart illustrating a method of operating for operating a fuel cell system in connection with start-up of the fuel cell system according to an example;
**FIGS. 4a-4b** are flow charts illustrate optional steps of the method described in **FIG. 3****.**
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

A fuel cell system which comprises one or more fuel cells is prone to degradation due to start-up and shutdown of the system. Typically, degradation is caused by high, reversed, or uneven voltage potentials, which are generally a result of uneven or undesirable distribution of reactants. Degradation may, e.g., also be caused by oxidation resulting from residual oxidant in the fuel cell. Degradation may also be caused by residual fuel in the anode flow field at fuel cell shutdown, which may contaminate the cathode flow field. At fuel cell start-up, the anode and cathode flow fields may contain a mixture of fuel and oxidant, which can cause hot spots and high potentials, contributing to degradation of the fuel cells.

Various strategies have been developed to mitigate degradation mechanisms during the startup and shutdown of fuel cell systems. Among these strategies, a known solution is purging, involving the use of inert gas to flush the fuel cell system. The primary aim of this purging method is to push the residual oxidant present out of the fuel cell system as fast as possible. However, the rapid nature of this process may lead to significant gas concentration gradients, posing potential challenges. Additionally, implementing this purging method necessitates the provision of extra storage for the inert gas, further complicating the system's requirements.

The present disclosure may seek to avoid significant gas concentration gradients, for example, unbalanced conditions where an oxygen-rich environment emerges a single side, either on the anode or cathode side. In particular, it may seek to transition from air-rich condition to a condition that is favorable for start-up without creating carbon corrosion conditions, significant concentration gradients, bursts of heat, uneven or undesirable voltage potentials. A technical benefit may include improved system homogeneity.

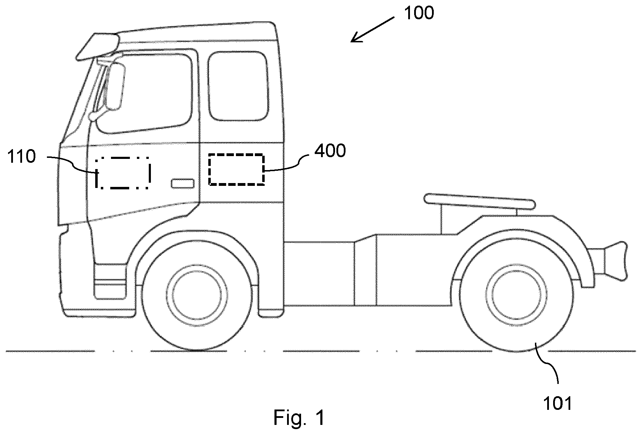

**Fig. 1** depicts a side view of a vehicle 100 according to an example. The vehicle 100 is here a truck, more specifically a heavy-duty truck for towing one or more trailers (not shown). Even though a heavy-duty truck 100 is shown it shall be noted that the invention is not limited to this type of vehicle but may be used for any other type of vehicle, such as a bus, construction equipment, e.g., a wheel loader and an excavator, and a passenger car. The invention is also applicable for other applications not relating to vehicles as long as a fuel cell is utilized.

The vehicle 100 comprises a fuel cell system 110 according to an example. The fuel cell system 110 is here used for powering one or more electric motors (not shown) which are used for creating a propulsion force to the vehicle 100. The fuel cell system 110 may additionally or alternatively be used for powering other electric power consumers of the vehicle 100, such as an electric motor for a refrigerator system, an electric motor for an air conditioning system or any other electric power consuming function of the vehicle 100. The vehicle 100 may further comprise an energy storage system (not shown) which typically comprises high-voltage batteries (not shown). The fuel cell system 110 is adapted to produce electric power, where the produced electric power may be fed to one or more electric motors (not shown), which are configured for providing propulsion power to driven wheels 101 of the vehicle 100. The electric power produced by the fuel cell system 110 may also be used to charge high-voltage batteries of the energy storage system. Power stored in the high-voltage energy storage system may further be fed to the one or more electric motors.

The vehicle 100 further comprises a control unit 400, which may also be a computer system 400. The control unit 400 is used for controlling the fuel cell system 110. Even though an on-board control unit 400 is shown, it shall be understood that the control unit 400 could also be a remote-control unit 400, i.e., an off-board control unit, or a combination of an on-board and off-board control unit. The control unit 200 may be configured to control the fuel cell system 110 by issuing control signals and by receiving status information relating to the fuel cell system 110.

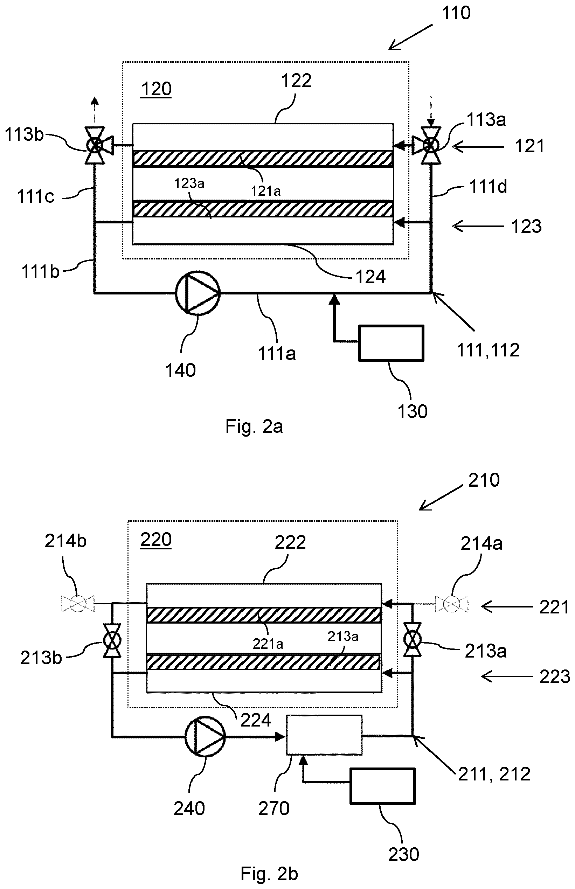

**Fig. 2a** depicts a schematic illustration of a fuel cell system 110 according to a first example. The fuel cell system 110 may for example be used in the vehicle 100 as shown in **FIG. 1****.** The shown fuel cell system 110 is a polymer electrolyte (PEM) fuel cell system configured to generate electrical current from a first reactant in the form of oxidant, such as air, and a second reactant in the form of fuel, such as hydrogen.

The fuel cell system 110 comprises a fuel cell stack 120, which in turn comprises a plurality of fuel cells (not shown), such as several hundred fuel cells. The fuel cell stack 120 has a cathode side 121 which comprises a cathode volume 122, and an anode side 123 which comprises an anode volume 124. Cathode catalyst layer 121a and anode catalyst layer 123a are provided within the cathode volume 122 and the anode volume 124, respectively. Although not shown in detail, the cathode volume 122 comprises cathode that is typically made of porous materials coated with a catalyst material and a cathode flow channel, and the anode volume 124 comprises anode that is typically made of porous materials coated with a catalyst material and an anode flow channel. An electrolyte layer, such as a polymer membrane is interposed between the cathode volume 122 and an anode volume 124 to form a membrane electrode assembly, which is configured to conduct protons while acting as an electronic insulator and reactant barrier, e.g. to oxygen and hydrogen gases.

The fuel cell system 110 further comprises a fluid flow assembly 111 comprising a plurality of fluid conduits 111a-111d and a pair of multi-way valves 113a, 113b, e.g., a pair of three-way valves 113a, 113b. The pair of three-way valves 113a, 113b is configured to control a fluid connection between the cathode volume 122 and the anode volume 124. Additionally, the three-way valves 113a, 113b may regulate air supply from an air intake conduit (not shown) into the cathode volume 121 and from the cathode volume 121 out to an exhaust conduit (not shown), as indicated by the arrows at the valves 113a, 113b. The valves 113a, 113b may be also regulated to allow a small amount of air into the fuel cell system 100. This may help to avoid under-pressure and/or to raise temperature when necessary. When the three-way valves 113a, 113b are regulated such that the cathode volume 122 and the anode volume 124 are fluidly connected, a closed loop 112 is formed in which any gas present in the fuel cell system 110 can be recirculated, preferably with the help of a blower 140. The fuel cell system 110 also comprises a hydrogen gas supply device 130, which may comprise a fuel injector (shown) and a hydrogen storage tank (not shown). The fuel injector may inject hydrogen gas, supplied from the hydrogen storage tank, into the fuel cell system 110 at a certain injection rate.

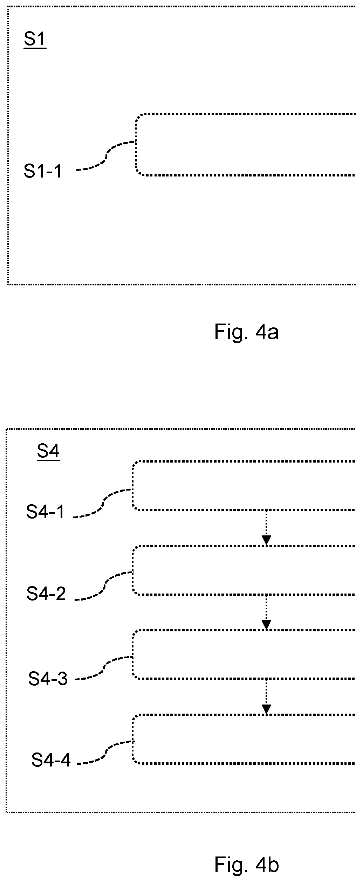

The control unit 400 shown in **FIG. 1** may be used for controlling the fuel cell system 110, for example, during the start-up. The control unit 400 may be configured to regulate the opening and closing of the pair of valves 113a, 113b to enable or disable the fluid connection between the cathode volume 122 and the anode volume 124. The control unit 400 may be configured to control the hydrogen gas supply device 130 and regulate an injection rate for injecting the hydrogen gas. The control unit 400 may further be configured to control the operation of the blower 140. The control of these devices as well as the fuel cell system 110 during a start-up process will be described in detail with reference to **FIG. 4****,** which illustrates steps of a method for operating a fuel cell system 110 in connection with start-up of the fuel cell system 110.

**FIGS. 2b-2d** show several fuel cell systems 210 according to other examples. The fuel cell system 210 in these examples comprise a fuel cell stack 220 identical to the first example, having a cathode side 221 with a cathode volume 222 and a cathode side 223 with a cathode volume 224, whereby catalytic layers 221a, 223a are provided in the corresponding volumes222, 224 . The fuel cell system 200 further comprise a fluid flow assembly 211 comprising a plurality of fluid conduits and a pair of two-way valves 213a, 213b for controlling a fluid connection between the cathode volume 222 and the anode volume 224. When the valves 213a, 213b are in an open state, a closed loop 212 may be formed such that gas in the fuel cell system 210 may be recirculated within the loop. The fuel cell system 210 further comprises a blower 240 configured for recirculating gas in the fuel cell system 210 when necessary and a hydrogen gas supply device 230.

In the illustrated example in **FIG. 2b****,** the fuel cell system 210 further comprises a catalytic device 270 that is provided separately from the fuel cell stack 220. In some examples, the catalytic device 270 comprises a catalytic membrane or a catalytic mesh. The catalytic mesh may e.g., be a platinum coated wire mesh, such as in the form of a rolled, crinkled, or waved sheet. The catalytic membrane may form a boundary that fluidly isolates two sides of the catalytic device from each other, as needed. The catalytic membrane may, e.g., be a catalyst coated proton conducting polymer electrolyte membrane, such as used in a PEM fuel cell. As another non-limiting example, the catalytic device 270 is a catalytic heat exchanger, such as a catalytic heat exchanger of a cabin heater of a vehicle in which the fuel cell system 210 is provided. The heat exchanger may e.g. be a catalytic hydrogen heater. Such a heater may be provided for other reasons and be exploited for at least partial passivation of reactants, such as of air, as necessary. Using a catalytic heat exchanger, the change in heat and/or pressure response arising as fuel and/or oxidant supply to the fuel cell stack is/are initiated can be used for checking whether an oxidant-fuel ratio (lambda value) is acceptable. In some examples, the catalytic heater may be on the cathode side and may incorporate a blower which may provide the function of blower 240. As shown in **FIG. 2b****,** the hydrogen gas supply device 230 is arranged upstream of the catalytic device 270. In some other examples, the hydrogen gas supply device 230 is arranged within the catalytic device 270. During the start-up process, hydrogen gas may be injected upstream of or directly into the catalytic device 270, and thereafter, the injected hydrogen gas may move to the cathode volume 222 and the anode volume 224, as indicated by the arrows, and circulate along with residual oxygen in the cathode volume 222 and in the anode volume 224, leading to a chemical reaction between the hydrogen gas and the residual oxygen. Once the gas mixture reaches catalytic device 270, the reaction may be further promoted within the catalytic device 270.

In this illustrated example, the fuel cell system 210 may further comprise a plurality of two-way valves 214a, 214b configured for regulating the air into and/or out of the cathode volume 222.

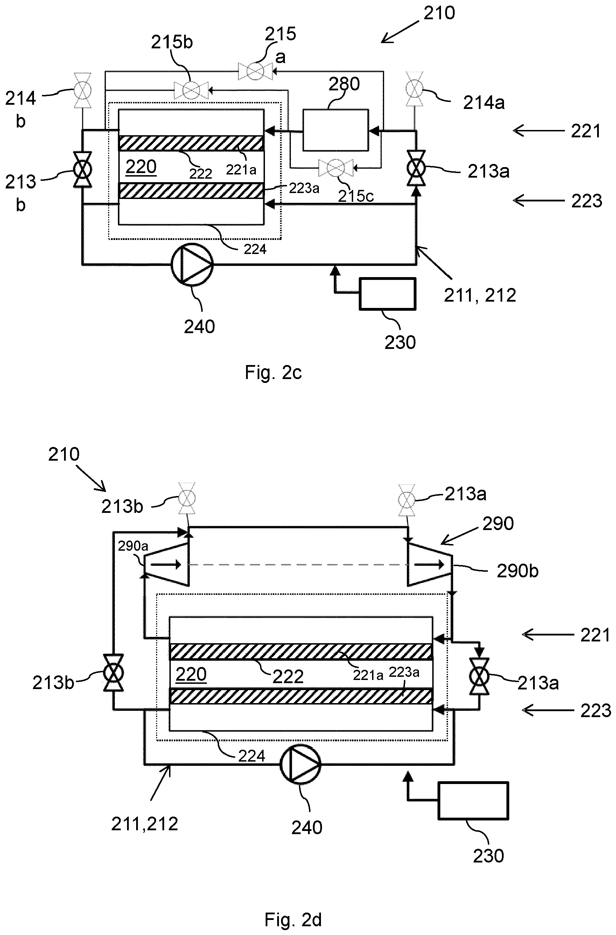

In the illustrated example in **FIG. 2c****,** the fuel cell system 210 further comprises a humidifier 280 arranged upstream of the cathode volume 222. The humidifier 280 is configured to humidify the gas mixture prior to entering the cathode volume 222. While FIG. 2c depicts a humidifier 280 arranged upstream of the cathode volume 222, it is conceivable that the humidifier 280 can be arranged at any suitable location in the fuel cell system 210. In this illustrated example, the fuel cell system 210 may further comprise a pair of two-way valves 214a, 214b configured for regulating the air into and/or out of the cathode volume 222, and a plurality of bypass valves 215a-215c for balancing gas flow in the fuel cell system 210.

In the illustrated example in **FIG. 2d****,** the fuel cell system 210 further comprises a turbocharger 290 having a compressor 290b and a turbine 290a, wherein the compressor 290b is driven by the turbine 290a. The turbocharger 280 may further enhance the recirculation process during the start-up process.

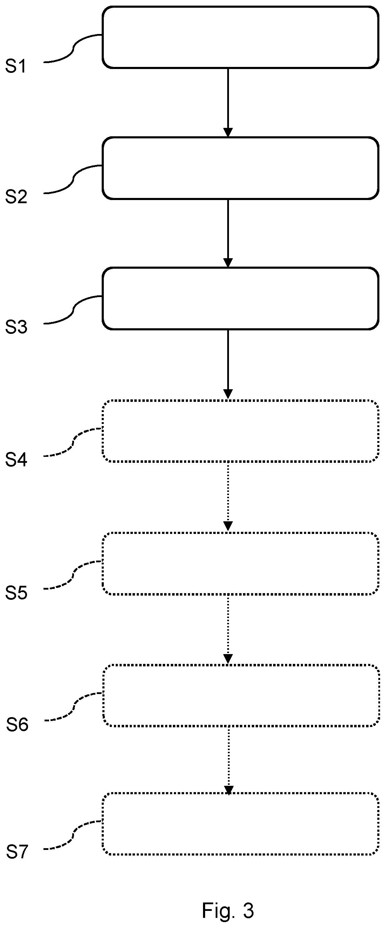

**FIG. 3** is a flow chart illustrating a method of operating for operating a fuel cell system 210 in connection with start-up of the fuel cell system according to an example. The method will be explained using the second example of the fuel cell system 210 shown in **FIG. 2b****.** It shall be noted that the method shall be applicable to the fuel cell system 110 illustrated in FIG. 2a as well. The method is performed by processing circuitry of the control unit 400 and comprises the steps listed in the following, which, unless otherwise indicated, may be taken in any suitable order.

**S1:** controlling the hydrogen gas supply device 230 to supply the hydrogen gas to the fuel cell system 210. Purely by way of example, for every 34.3 g of residual air present in the fuel cell system 210, 1 g of hydrogen gas may be required to neutralize the residual oxygen in the air. As another example, 2.39 liters of air may require 1L hydrogen to be injected. In some examples, excess hydrogen may be added beyond what is required. The excess hydrogen may, for example, be used to purge the oxygen-free air in the anode side. Using the example of **FIG. 2b** where the fuel cell system 210 comprises a catalyst device 270, the method further comprises optional steps, as illustrated in **FIG. 4a****, S1-1:** controlling the hydrogen gas supply device 230 to inject the hydrogen gas into the catalytic device 270. In this example, the hydrogen gas supply device 230 may comprise a fuel injector (not shown) which is configured to inject the hydrogen gas at a controllable rate. The injection rate may be sufficiently slow such that the hydrogen gas may be supplied in a gentle manner. In this way, the oxygen of the residual air may be consumed gradually.

**S2:** regulating the fluid flow control device 213a 213b such that the anode volume 224 is fluidly connected to the cathode volume 222. As such, a closed loop 212 is formed in which any gas present in the fuel cell system 210 can be recirculated. The closed loop herein may also be understood as a recirculation circuit 212 that is formed by the fluid flow assembly 211.

**S3:** controlling the recirculation device 240 to recirculate the gas mixture in the fluid recirculation circuit 212 such that the supplied hydrogen gas undergoes reaction with the residual oxygen during the recirculation, resulting in a reduced amount of residual oxygen in the fuel cell system 210.

After the hydrogen gas is injected into the catalyst device 270, it may move to the cathode volume 222 and the anode volume 224, as indicated by the arrows. Thereafter, the hydrogen gas may circulate alongside residual oxygen present in the cathode volume 222 and in the anode volume 224, leading to a chemical reaction between them. Once the gas mixture reaches catalytic device 270, the reaction may be further promoted within the catalytic device 270. During the recirculation process, the hydrogen gas may react with the residual oxygen at a relatively slow rate, and the oxygen is consumed gradually. During this process, it may generate heat and water as byproducts of the chemical reaction, which may take place within both the cathode and anode volumes 222, 224. The the hydrogen gas may also react with the oxygen within the anode and cathode volumes 222, 224 in which catalytic layers 221a, 223a are provided. As a result, it may allow for an even distribution of heat and moisture throughout the entirety of the fuel cell stack 220. In this way, it may effectively pre-warm and humidify the fuel cell stack 220 and consequently, the fuel cell system 210 may be well-prepared for the start-up.

In some examples, the method further comprises the following optional steps:
**S4:** estimating, a remaining oxygen level in the gas mixture, and
   In some examples, this step **S4** may be performed in the beginning of the start-up process. For example, if the oxygen level is estimated to be higher than a threshold level, the processing circuitry 402 of the control unit 400 may control the fuel cell system 270 to start to perform the method from **S1.**
**S5:** in response to the estimated remaining oxygen level being lower than a threshold value, controlling the hydrogen gas supply device 240 to terminate supply of the hydrogen gas to the fuel cell system 220 and regulating the fluid flow control device 213a, 213b such that the anode volume 224 is fluidly disconnected from the cathode volume 222.

In some examples, as illustrated in **FIG. 4b****,** the step **S4** may further comprise the following sub-steps:
**S4-1:** monitoring a temperature at the catalytic device 270 and/or of the gas mixture, and
**S4-2:** estimating the remaining oxygen level in the gas mixture based on the monitored temperature.

The temperature at the catalytic device 270 and/or of the gas mixture may generally provide a good indication of the ongoing chemical reaction process of the supplied hydrogen and residual oxygen, which may also be an indication of the remaining oxygen level.

In some other examples, the remaining oxygen level may be evaluated using pressure and the step **S4** may further comprise the following sub steps:
**S4-3:** monitoring, by the processing circuitry, pressure at the catalytic device 270 and/or of the gas mixture,
**S4-4:** estimating the remaining oxygen level in the gas mixture based on the monitored pressure.

Upon the injection of hydrogen gas into the catalytic device 270, an initial pressure drop may occur due to the chemical interaction between the hydrogen and residual oxygen. As the oxygen is progressively consumed during the reaction, a reversal in pressure dynamics may be observed. The partial pressure of the supplied hydrogen gas may begin to ascend, subsequently resulting in an increased pressure. As such, by monitoring the pressure changes, it may be possible to evaluate the remaining oxygen level in the gas mixture.

In some examples, the method further comprises the following optional steps:
**S6:** in response to the anode volume 224 being fluidly disconnected from the cathode volume 222, controlling, the hydrogen gas supply device 230 to supply hydrogen gas to the anode volume 224, and controlling, an air supply device (not shown) to supply air to the cathode volume 222. This is to ensure that the residual nitrogen present in the anode volume 224 as well as in the cathode volume 222 is purged, respectively. Thereafter, the fuel cell system may be well-prepared for start-up.
**S7:** starting the fuel cell system 200.

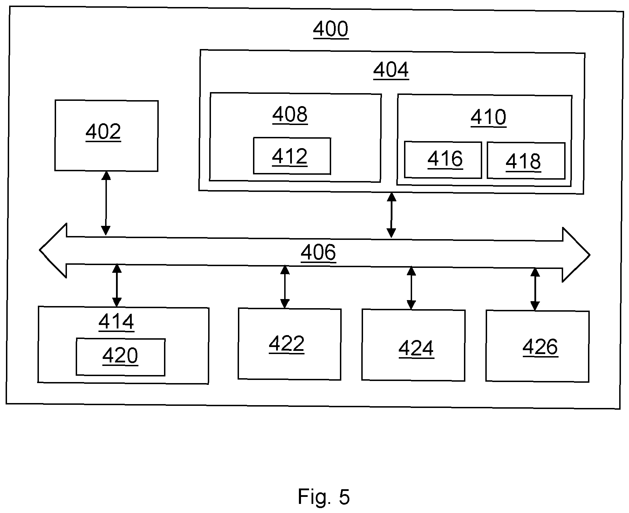

**FIG 5****.** illustrates a computer system 400, which may be seen as the control unit 400 of the vehicle 100 and/or the fuel cell system 110. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Moreover, the present disclosure may be exemplified by any one of the below examples and combination of examples.

Example 1: A computer system (400) comprising a processing circuitry (402) configured to operate a fuel cell system (110, 210) in connection with start-up of the fuel cell system (110, 210), the fuel cell system (110, 210) comprising:
- a fuel cell stack (120, 220) comprising an anode side (121, 221) and a cathode side (123, 223), wherein the anode side (121, 221) comprises an anode volume (124, 224) and the cathode side (123, 223) comprises a cathode volume (122, 222),
- a fluid flow assembly (111, 211) comprising a plurality of fluid conduits (11 1a-1 11d) and a fluid flow control device (113a, 113b, 213a, 213b), wherein the fluid flow assembly (111, 211) is arranged to selectively enable a fluid connection between the anode volume (124, 224) and the cathode volume (122, 222), wherein a recirculation circuit (112, 212) is formed when the fluid connection between the anode volume (124, 224) and the cathode volume (122, 222) is enabled,
- a hydrogen gas supply device (130, 230), and
- a recirculation device (140, 240) arranged on the recirculation circuit (112, 212) and configured to recirculate a gas mixture of supplied hydrogen gas and residual gases in the recirculation circuit (112, 212), wherein the residual gases comprise residual oxygen and residual nitrogen present in the fuel cell stack (120, 220),
the processing circuitry being configured to:
- control the hydrogen gas supply device (130, 230) to supply the hydrogen gas to the fuel cell system (110, 210),
- regulate the fluid flow control device (113a, 113b, 213a, 213b) such that the anode volume (124, 224) is fluidly connected to the cathode volume (122, 222), and
- control the recirculation device (140, 240) to recirculate the gas mixture in the fluid recirculation circuit (112, 212) such that the supplied hydrogen gas undergoes reaction with the residual oxygen during the recirculation, resulting in a reduced amount of residual oxygen in the fuel cell system (110, 210).

Example 2: A computer-implemented method for operating a fuel cell system (110, 210) in connection with start-up of the fuel cell system (110, 210), the fuel cell system (110, 210) comprising:
- a fuel cell stack (120, 220) comprising an anode side (121, 221) and a cathode side (123, 223), wherein the anode side (121, 221) comprises an anode volume (124, 224) and the cathode side (123, 223) comprises a cathode volume (122, 222),
- a fluid flow assembly (111, 211) comprising a plurality of fluid conduits and a fluid flow control device (113a, 113b, 213a, 213b), wherein the fluid flow assembly (111, 211) is arranged to selectively enable a fluid connection between the anode volume (124, 224) and the cathode volume (122, 222), wherein a recirculation circuit (112, 212) is formed when the fluid connection between the anode volume (124, 224) and the cathode volume (122, 222) is enabled,
- a hydrogen gas supply device (130, 230), and
- a recirculation device (140, 240) arranged on the recirculation circuit (112, 212) and configured to recirculate a gas mixture of supplied hydrogen gas and residual gases in the recirculation circuit (112, 212), wherein the residual gases comprise residual oxygen and residual nitrogen present in the fuel cell stack (120, 220).
the method comprising:
- controlling (S1), by processing circuitry, the hydrogen gas supply device (130, 230) to supply the hydrogen gas to the fuel cell system (110, 210),
- regulating (S2), by the processing circuitry, the fluid flow control device (113 a, 113b, 213a, 213b) such that the anode volume (124, 224) is fluidly connected to the cathode volume (122, 222),
- controlling (S3), by the processing circuitry, the recirculation device (140, 240) to recirculate the gas mixture in the fluid recirculation circuit (112, 212) such that the supplied hydrogen gas undergoes reaction with the residual oxygen during the recirculation, resulting in a reduced amount of residual oxygen in the fuel cell system (110, 210).

Example 3: The method according to example 2, wherein the hydrogen gas is supplied to the fuel cell system (110, 210) through hydrogen injection at a controllable injection rate.

Example 4: The method according to claim 3, wherein the fuel cell system (110, 210) further comprises a catalytic device (270) at which reaction of the supplied hydrogen gas with the residual oxygen is promoted, wherein the catalytic device (270) is provided separately from the fuel cell stack (120, 220), and wherein the method further comprises:
- controlling (S1-1), by the processing circuitry, the hydrogen gas supply device (130, 230) to inject the hydrogen gas into the catalytic device (270).

Example 5: The method according to any one of examples 2-4, further comprising:
- estimating (S4), by the processing circuitry, a remaining oxygen level in the gas mixture,
- in response to the estimated remaining oxygen level being lower than a threshold value, regulating, the processing circuitry, the fluid flow control device (113a, 113b, 213a, 213b) such that the anode volume (124, 224) is fluidly disconnected from the cathode volume (122, 222) and controlling (S5), by the processing circuitry, the hydrogen gas supply device (130, 230) to terminate supply the hydrogen gas to the fuel cell system (110, 210).

Example 6: The method according to Example 4 and Example 5, wherein estimating (S4) the remaining oxygen level in the gas mixture further comprises:
- monitoring (S4-1), by the processing circuitry, a temperature at the catalytic device (270) and/or of the gas mixture,
- estimating (S4-2), by the processing circuitry, the remaining oxygen level in the gas mixture based on the monitored temperature.

Example 7: The method according to Example 4 and Example 5, wherein estimating the remaining oxygen level in the gas mixture further comprises:
- Monitoring (S4-3), by the processing circuitry, pressure the catalytic device (270) and/or of the gas mixture,
- Estimating (S4-4), by the processing circuitry, the remaining oxygen level in the gas mixture based on the monitored pressure.

Example 8: The method according to any one of Examples 5-7, further comprising:
- in response to the anode volume (124, 224) being fluidly disconnected from the cathode volume (122, 222), controlling (S6), by the processing circuitry, the hydrogen gas supply device (130, 230) to supply hydrogen gas to the anode volume (124, 224), and controlling, by the processing circuitry, an air supply device to supply air to the cathode volume (122, 222), and
- starting (S7), by the processing circuitry, the fuel cell system (110, 210).

Example 9: A fuel cell system (110, 210) for supplying electric power, comprising:
- a fuel cell stack (120, 220) comprising an anode side (121, 221) and a cathode side (123, 223), wherein the anode side (121, 221) comprises an anode volume (124, 224) and the cathode side (123, 223) comprises a cathode volume (122, 222)
- a fluid flow assembly (111, 211) comprising a plurality of fluid conduits and a fluid flow control device (113a, 113b, 213a, 213b), wherein the fluid flow assembly (111, 211) is arranged to selectively enable a fluid connection between the anode volume (124, 224) and the cathode volume (122, 222), wherein a recirculation circuit (112, 212) is formed when the fluid connection between the anode volume (124, 224) and the cathode volume (122, 222) is enabled,
- a hydrogen gas supply device (130, 230) configured to supply hydrogen gas to the fuel cell system (110, 210), and
- a recirculation device (140, 240) (140, 240) arranged on the recirculation circuit (112, 212) and configured to recirculate a gas mixture of supplied hydrogen gas and residual gases in the recirculation circuit (112, 212), wherein the residual gases comprise residual oxygen and residual nitrogen present in the fuel cell stack (120, 220) and
a control unit (400) comprising processing circuitry configured to:
- control the hydrogen gas supply device (130, 230) to supply the hydrogen gas to the fuel cell system (110, 210),
- regulate the fluid control device (113a, 113b, 213a, 213b) such that the anode volume (124, 224) is fluidly connected to the cathode volume (122, 222), and
- control the recirculation device (140, 240) to recirculate the gas mixture in the fluid recirculation circuit (112, 212) such that the supplied hydrogen gas undergoes reaction with the residual oxygen during the recirculation, resulting in a reduced amount of residual oxygen in the fuel cell system (110, 210).

Example 10: The fuel cell system (110, 210) according to Example 9, wherein the hydrogen gas supply device (130, 230) comprises a fuel injector configured to supply the hydrogen gas at a controllable injection rate.

Example 11: The fuel cell system (110, 210) according to any one of Examples 9-10, further comprising a catalytic device (270) at which reaction of the supplied hydrogen gas with the residual oxygen gas is promoted, wherein the catalytic device (270) is provided separately from the fuel cell stack (120, 220).

Example 12: The fuel cell system (110, 210) according to any one of examples 9-11, wherein the fluid flow control device (113a, 113b, 213a, 213b)comprises one or more three-way valve (113a, 113b) and/or one or more two-way valve (213a, 213b).

Example 13: The fuel cell system (110, 210) according to any one of examples 9-12, wherein the recirculation device (140, 240) comprises a blower (140, 240), preferably arranged downstream of the anode volume (124, 224).

Example 14: The fuel cell system (110, 210) according to example 13, wherein the recirculation device (140, 240) further comprises a turbocharger (290), preferably arranged downstream of the cathode volume (122, 222).

Example 15: The fuel cell system (110, 210) according to any one of examples 11-1, further comprising a humidifier (280) configured to humidify the gas mixture prior to entering the cathode volume (222).

Example 16: The fuel cell system according (110, 210) to Example 15, wherein the humidifier (280) is provided with one or more bypass valves (215a-215c), configured to selectively bypass the gas flow from the humidifier.

Example 17: A computer program product comprising program code for performing, when executed by the processing circuitry, the method of any one of examples 1 - 8.

Example 18: A non-transitory computer-readable storage medium comprising instructions, which when executed by the processing circuitry, cause the processing circuitry to perform the method of any of examples 1 - 8.

Example 19: A vehicle (100) comprising a fuel cell system (110, 210) according to any one of examples 9-12.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) comprising a processing circuitry (402) configured to operate a fuel cell system (110, 210) in connection with start-up of the fuel cell system (110, 210), the fuel cell system (110, 210) comprising:
- a fuel cell stack (120, 220) comprising an anode side (121, 221) and a cathode side (123, 223), wherein the anode side (121, 221) comprises an anode volume (124, 224) and the cathode side (123, 223) comprises a cathode volume (122, 222),
- a fluid flow assembly (111, 211) comprising a plurality of fluid conduits (111a-111d) and a fluid flow control device (113a, 113b, 213a, 213b), wherein the fluid flow assembly (111, 211) is arranged to selectively enable a fluid connection between the anode volume (124, 224) and the cathode volume (122, 222), wherein a recirculation circuit (112, 212) is formed when the fluid connection between the anode volume (124, 224) and the cathode volume (122, 222) is enabled,
- a hydrogen gas supply device (130, 230), and
- a recirculation device (140, 240) arranged on the recirculation circuit (112, 212) and configured to recirculate a gas mixture of supplied hydrogen gas and residual gases in the recirculation circuit (112, 212), wherein the residual gases comprise residual oxygen and residual nitrogen present in the fuel cell stack (120, 220),
the processing circuitry being configured to:
- control the hydrogen gas supply device (130, 230) to supply the hydrogen gas to the fuel cell system (110, 210),
- regulate the fluid flow control device (113a, 113b, 213a, 213b) such that the anode volume (124, 224) is fluidly connected to the cathode volume (122, 222), and
- control the recirculation device (140, 240) to recirculate the gas mixture in the fluid recirculation circuit (112, 212) such that the supplied hydrogen gas undergoes reaction with the residual oxygen during the recirculation, resulting in a reduced amount of residual oxygen in the fuel cell system (110, 210).

2. A computer-implemented method for operating a fuel cell system (110, 210) in connection with start-up of the fuel cell system (110, 210), the fuel cell system (110, 210) comprising:
- a fuel cell stack (120, 220) comprising an anode side (121, 221) and a cathode side (123, 223), wherein the anode side (121, 221) comprises an anode volume (124, 224) and the cathode side (123, 223) comprises a cathode volume (122, 222),
- a fluid flow assembly (111, 211) comprising a plurality of fluid conduits and a fluid flow control device (113a, 113b, 213a, 213b), wherein the fluid flow assembly (111, 211) is arranged to selectively enable a fluid connection between the anode volume (124, 224) and the cathode volume (122, 222), wherein a recirculation circuit (112, 212) is formed when the fluid connection between the anode volume (124, 224) and the cathode volume (122, 222) is enabled,
- a hydrogen gas supply device (130, 230), and
- a recirculation device (140, 240) arranged on the recirculation circuit (112, 212) and configured to recirculate a gas mixture of supplied hydrogen gas and residual gases in the recirculation circuit (112, 212), wherein the residual gases comprise residual oxygen and residual nitrogen present in the fuel cell stack (120, 220).
the method comprising:
- controlling (S1), by processing circuitry, the hydrogen gas supply device (130, 230) to supply the hydrogen gas to the fuel cell system (110, 210),
- regulating (S2), by the processing circuitry, the fluid flow control device (113 a, 113b, 213a, 213b) such that the anode volume (124, 224) is fluidly connected to the cathode volume (122, 222),
- controlling (S3), by the processing circuitry, the recirculation device (140, 240) to recirculate the gas mixture in the fluid recirculation circuit (112, 212) such that the supplied hydrogen gas undergoes reaction with the residual oxygen during the recirculation, resulting in a reduced amount of residual oxygen in the fuel cell system (110, 210).

3. The method according to claim 2, wherein the hydrogen gas is supplied to the fuel cell system (110, 210) through hydrogen injection at a controllable injection rate.

4. The method according to claim 3, wherein the fuel cell system (110, 210) further comprises a catalytic device (270) at which reaction of the supplied hydrogen gas with the residual oxygen is promoted, wherein the catalytic device (270) is provided separately from the fuel cell stack (120, 220), and wherein the method further comprises:
- controlling (S1-1), by the processing circuitry, the hydrogen gas supply device (130, 230) to inject the hydrogen gas into the catalytic device (270).

5. The method according to any one of claims 2-4, further comprising:
- estimating (S4), by the processing circuitry, a remaining oxygen level in the gas mixture,
- in response to the estimated remaining oxygen level being lower than a threshold value, regulating, the processing circuitry, the fluid flow control device (113a, 113b, 213a, 213b) such that the anode volume (124, 224) is fluidly disconnected from the cathode volume (122, 222) and controlling (S5), by the processing circuitry, the hydrogen gas supply device (130, 230) to terminate supply the hydrogen gas to the fuel cell system (110, 210).

6. The method according to claim 4 and claim 5, wherein estimating (S4) the remaining oxygen level in the gas mixture further comprises:
- monitoring (S4-1), by the processing circuitry, a temperature at the catalytic device (270) and/or of the gas mixture,
- estimating (S4-2), by the processing circuitry, the remaining oxygen level in the gas mixture based on the monitored temperature.

7. The method according to claim 4 and claim 5, wherein estimating the remaining oxygen level in the gas mixture further comprises:
- Monitoring (S4-3), by the processing circuitry, pressure the catalytic device (270) and/or of the gas mixture,
- Estimating (S4-4), by the processing circuitry, the remaining oxygen level in the gas mixture based on the monitored pressure.

8. The method according to any one of claims 5-7, further comprising:
- in response to the anode volume (124, 224) being fluidly disconnected from the cathode volume (122, 222), controlling (S6), by the processing circuitry, the hydrogen gas supply device (130, 230) to supply hydrogen gas to the anode volume (124, 224), and controlling, by the processing circuitry, an air supply device to supply air to the cathode volume (122, 222), and
- starting (S7), by the processing circuitry, the fuel cell system (110, 210).

9. A fuel cell system (110, 210) for supplying electric power, comprising:
- a fuel cell stack (120, 220) comprising an anode side (121, 221) and a cathode side (123, 223), wherein the anode side (121, 221) comprises an anode volume (124, 224) and the cathode side (123, 223) comprises a cathode volume (122, 222)
- a fluid flow assembly (111, 211) comprising a plurality of fluid conduits and a fluid flow control device (113a, 113b, 213a, 213b), wherein the fluid flow assembly (111, 211) is arranged to selectively enable a fluid connection between the anode volume (124, 224) and the cathode volume (122, 222), wherein a recirculation circuit (112, 212) is formed when the fluid connection between the anode volume (124, 224) and the cathode volume (122, 222) is enabled,
- a hydrogen gas supply device (130, 230) configured to supply hydrogen gas to the fuel cell system (110, 210), and
- a recirculation device (140, 240) (140, 240) arranged on the recirculation circuit (112, 212) and configured to recirculate a gas mixture of supplied hydrogen gas and residual gases in the recirculation circuit (112, 212), wherein the residual gases comprise residual oxygen and residual nitrogen present in the fuel cell stack (120, 220) and a control unit (400) comprising processing circuitry configured to:
- control the hydrogen gas supply device (130, 230) to supply the hydrogen gas to the fuel cell system (110, 210),
- regulate the fluid control device (113a, 113b, 213a, 213b) such that the anode volume (124, 224) is fluidly connected to the cathode volume (122, 222), and
- control the recirculation device (140, 240) to recirculate the gas mixture in the fluid recirculation circuit (112, 212) such that the supplied hydrogen gas undergoes reaction with the residual oxygen during the recirculation, resulting in a reduced amount of residual oxygen in the fuel cell system (110, 210).

10. The fuel cell system (110, 210) according to claim 9, wherein the hydrogen gas supply device (130, 230) comprises a fuel injector configured to supply the hydrogen gas at a controllable injection rate.

11. The fuel cell system (110, 210) according to any one of claims 9-10, further comprising a catalytic device (270) at which reaction of the supplied hydrogen gas with the residual oxygen gas is promoted, wherein the catalytic device (270) is provided separately from the fuel cell stack (120, 220).

12. The fuel cell system (110, 210) according to any one of claims 9-11, wherein the recirculation device (140, 240) comprises a blower, preferably arranged downstream of the anode volume (124, 224).

13. A computer program product comprising program code for performing, when executed by the processing circuitry, the method of any one of claims 1-8.

14. A non-transitory computer-readable storage medium comprising instructions, which when executed by the processing circuitry, cause the processing circuitry to perform the method of any of claims 1-8.

15. A vehicle comprising a fuel cell system (110, 210) according to any one of claims 9-12.
